(19) Europäisches Patentamt
European Patent Office
Office européen des brevets

(11) **EP 3 238 515 B1**

(12) **EUROPÄISCHE PATENTSCHRIFT**

(45) Veröffentlichungstag und Bekanntmachung des Hinweises auf die Patenterteilung:
**26.08.2020 Patentblatt 2020/35**

(51) Int Cl.:
***A01B 59/06*** (2006.01)

(21) Anmeldenummer: **17165883.4**

(22) Anmeldetag: **11.04.2017**

(54) **VERFAHREN ZUR ERMITTLUNG EINER MASSE EINES ANBAUGERÄTES FÜR EIN NUTZFAHRZEUG**

METHOD FOR DETERMINING A MASS OF AN ATTACHMENT FOR A WORK VEHICLE

PROCÉDÉ DE DÉTERMINATION D'UNE MASSE D'ÉQUIPEMENT PORTÉ POUR UN VÉHICULE UTILITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2016 DE 102016207200**

(43) Veröffentlichungstag der Anmeldung:
**01.11.2017 Patentblatt 2017/44**

(73) Patentinhaber: **Deere & Company**
**Moline, IL 61265 (US)**

(72) Erfinder:
• **Meid, Michael**
**68163 Mannheim (DE)**

• **Traut, Sebastian**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 0 892 256       EP-A1- 2 947 431**
**DE-A1- 3 820 757       DE-A1- 4 328 147**
**US-A1- 2008 110 647**

**Beschreibung**

Die Erfindung betrifft ein Verfahren zur Ermittlung einer Masse eines Anbaugerätes, welches an eine Tragstruktur eines Nutzfahrzeugs angelenkt ist.

Es ist bekannt, an der Heckseite von landwirtschaftlichen Fahrzeugen sogenannte Anbaugeräte mit bestimmten Arbeitsfunktionen anzukoppeln. Zur Kopplung kann ein Heckkraftheber verwendet werden. Oftmals ist es wichtig, während des Fahrzeugbetriebs eine Information über den aktuellen Status einer Masse des Anbaugerätes zu erhalten, um den landwirtschaftlichen Einsatz besser steuern zu können. Das Dokument EP 2 947 431 A1 offenbart ein Verfahren zur Ermittlung einer Masse eines Anbaugerätes nach dem Oberbegriff des Anspruchs 1.

Der Erfindung liegt daher die Aufgabe zugrunde, eine aktuelle Status-Information über eine Masse des Anbaugerätes auf einfache Weise zu ermitteln.

Diese Aufgabe wird gemäß den Merkmalen des Patentanspruchs 1 gelöst.

Gemäß Patentanspruch 1 wird eine Masse des Anbaugerätes ermittelt. Die jeweilige Status-Information bezüglich einer ermittelten Masse ist insbesondere relevant für Anbaugeräte mit variabler Zuladung (z.B. Spritzmittel, Dünger, Saatgut), beispielsweise für Spritzgeräte, Düngerstreuer, Saatgutstreuer.

Die ermittelte Masse des Anbaugerätes ist vorzugsweise eine aktuelle Gesamtmasse des Anbaugerätes einschließlich der aktuellen Zuladungs-Menge oder eine Masse des Anbaugerätes ohne Zuladung. Da die Masse des Anbaugerätes ohne Zuladung ermittelbar ist oder sogar bereits bekannt ist, kann während des Einsatzes des Fahrzeugs jederzeit die verbrauchte Menge der Zuladung ermittelt werden. Aus der Ermittlung der Masse des Anbaugerätes können auch weitere Informationen abgeleitet werden, beispielsweise die ausgebrachte Masse bzw. Menge der Zuladung je gefahrener Streckeneinheit (z.B. Meter) des Fahrzeugs oder eine Rest-Reichweite der auszubringenden Zuladung. Derartige Informationen können mit geringem Daten- und Rechenaufwand ermittelt und dem Fahrzeugführer oder einer anderen für den Fahrzeugeinsatz zuständigen Person auf geeignete Weise optisch und/oder akustisch (z.B. an einer graphischen Bedienungsoberfläche) zur Verfügung gestellt werden. Die Ermittlung der Masse und daraus abgeleitete Informationen können deshalb dazu beitragen, den jeweiligen Arbeitseinsatz des Fahrzeugs effizient und für den Fahrzeugführer komfortabel zu gestalten.

Die Masse des Anbaugerätes wird auf der Basis von verhältnismäßig einfach bestimmbaren physikalischen Größen am Heckkraftheber ermittelt. Dabei werden folgende Größen ermittelt:

- ein Winkel zwischen dem Oberlenker und einer Fahrzeug-Horizontalen,
- ein Winkel zwischen dem Unterlenker und einer Fahrzeug-Horizontalen,
- ein Neigungswinkel einer Fahrzeug-Horizontalen gegenüber der Erdhorizontalen,
- eine Strecke, welche eine Verbindung entlang des Unterlenkers zwischen der Tragstruktur und dem Anbaugerät repräsentiert,
- eine an einer Verbindung zwischen Oberlenker und Anbaugerät angreifende und entlang des Oberlenkers wirksame Kraft.

Die vorgenannten Winkel können mittels geeigneter Längensensoren oder Abstandssensoren ermittelt werden. Alternativ können Winkelsensoren eingesetzt werden. Im Falle eines mechanischen Oberlenkers kann der Winkel zwischen dem Oberlenker und einer Fahrzeug-Horizontalen auch mittels eines zweiaxialen Kraftsensors (Kraftmessbolzens) bestimmt werden. Vorzugsweise ist dieser zweiaxiale Kraftsensor an einer Verbindungsstelle positioniert, welche als Verbindung zwischen der Tragstruktur und dem Oberlenker wirkt. Die vorgenannte Strecke ist vorzugsweise bekannt und muss dann nicht weiter ermittelt werden. Alternativ kann zur Ermittlung der Strecke ein Längensensor oder Abstandssensor verwendet werden. Die an der Verbindung zwischen Oberlenker und Anbaugerät angreifende und entlang des Oberlenkers wirksame Kraft kann mittels Drucksensoren im Oberlenker ermittelt werden.

Analog können auch die weiteren noch zu beschreibenden Winkel, Strecken und Kräfte mittels eines oder mehrerer der vorgenannten Sensoren ermittelt oder gemessen werden.

Insgesamt kann mit einer geringen Anzahl als Standardprodukte verfügbarer Sensoren und somit kostengünstig mit wenigen sensierten physikalischen Größen die Masse des Anbaugerätes ermittelt werden. Teilweise können die benötigten Sensoren für andere Zwecke ohnehin bereits am Fahrzeug vorhanden sein, so dass in solchen Fällen der Aufwand für die Ermittlung der Masse des Anbaugerätes weiter reduziert ist.

Die gegenüber der Fahrzeug-Horizontalen bzw. Fahrzeug-Vertikalen gebildeten Winkel beziehen sich hierbei vorzugsweise auf ein fahrzeugfestes Koordinatensystem. Eine Neigung der Tragstruktur bzw. des Nutzfahrzeugs bzw. des fahrzeugfesten Koordinatensystems gegenüber der Erdhorizontalen wird hierbei durch den oben genannten Neigungswinkel berücksichtigt. Der Neigungswinkel nimmt Werte größer Null für den Fall an, dass das Nutzfahrzeug in Vorwärtsrichtung hangaufwärts orientiert ist.

Das Nutzfahrzeug ist insbesondere ein landwirtschaftliches Fahrzeug, z.B. ein Traktor. Bei der Tragstruktur handelt es sich um eine tragende Struktur des Fahrzeugs, z.B. um einen Rahmen oder andere tragende Teile. Oberlenker und Unterlenker des Heckkrafthebers sind an der Tragstruktur schwenkbar gelagert bzw. angelenkt, um das jeweilige Anbaugerät in unterschiedliche Positionen zu überführen.

Eine schwenkbare Lagerung bzw. Anlenkung an der Tragstruktur bedeutet, dass das jeweilige Bauteil entweder unmittelbar an der Tragstruktur selbst oder an einem mit der Tragstruktur starr verbundenen Bestandteil (z.B. Gehäuse eines Getriebe-Differenzial-Blocks) des Fahrzeugs gelagert bzw. angelenkt ist.

Der Kraftheber bewirkt üblicherweise eine Mehrpunktaufnahme des Anbaugerätes an dem Fahrzeug. Insbesondere ist eine Dreipunktaufnahme vorgesehen, bei der das Anbaugerät mittels zweier Unterlenker und eines Oberlenkers an der Tragstruktur aufgenommen bzw. an der Tragstruktur angelenkt ist.

Der Kraftheber enthält üblicherweise mindestens einen längenverstellbaren Hubarm, um das Anbaugerät mittels der vorhandenen Unterlenker und Oberlenker in unterschiedliche Positionen (z.B. Arbeitsposition, Transportposition) überführen zu können. Die am Kraftheber vorhandenen Hubarme werden zumindest teilweise auf geeignete Weise angesteuert (z.B. hydraulisch oder elektrisch), um Hebe- und Senkbewegungen des Krafthebers zu realisieren.

Ein längenverstellbarer Hubarm wird herangezogen, um eine oder mehrere physikalische Größen zur Ermittlung der Masse des Anbaugerätes abzuleiten. Erfindungsgemäß wird dabei ein Winkel berücksichtigt, der von einer Fahrzeug-Vertikalen und einer Verbindungsstrecke zwischen zwei Wirkenden des Hubarmes eingeschlossen ist. Dieser Winkel wird durch eine geeignete Sensorik, z.B. einen Winkelsensor, ermittelt oder rechnerisch abgeleitet.

Weiter erfindungsgemäß wird zur Ermittlung der Masse des Anbaugerätes eine zwischen den zwei Wirkenden des Hubarmes wirksame Druckkraft berücksichtigt. Die Ermittlung dieser Kraft kann entweder direkt mittels einer Sensorik an diesem Hubarm oder indirekt mittels einer Sensorik an einer anderen geeigneten Stelle des Krafthebers ermittelt werden. Die Sensorik weist vorzugsweise einen Drucksensor, insbesondere einen Differenzdrucksensor, auf. Ein Wirkende des längenverstellbaren Hubarms ist mit der Tragstruktur gelenkig verbunden, während ein weiteres Wirkende des Hubarms an einer Lenker-Verbindungsstelle des Unterlenkers angelenkt ist. Erfindungsgemäß wird hierbei auf einfache Weise eine weitere Größe zur Ermittlung der Masse des Anbaugerätes berücksichtigt. Diese Größe ist die Länge einer Verbindungsstrecke entlang des Unterlenkers zwischen der Tragstruktur und der Lenker-Verbindungsstelle. Die Länge dieser Verbindungsstrecke ist entweder bereits aus den Daten des Krafthebers bekannt oder wird auf geeignete Weise ermittelt.

Wie bereits erwähnt, ist ein Wirkende des längenverstellbaren Hubarms mit der Tragstruktur gelenkig verbunden. Vorzugsweise ist diese Verbindung als eine mittelbare gelenkige Verbindung realisiert, bei der das genannte Wirkende des Hubarmes zunächst an einen weiteren Gelenkarm angelenkt ist, der wiederum mit der Tragstruktur gelenkig verbunden ist.

Der Gelenkarm weist vorzugsweise mindestens drei Gelenkstellen auf. Hierdurch ist es auf kinematisch einfache Weise möglich, einen zusätzlichen längenverstellbaren Hubarm mit der dritten Gelenkstelle und der Tragstruktur zu verbinden. Dieser zusätzliche Hubarm kann dann (z.B. hydraulisch) angesteuert werden, um eine Längenverstellung des Hubarmes zwischen dem Gelenkarm und dem Unterlenker zu bewirken.

Vorzugsweise sind einzelne oder sämtliche im Kraftheber eingesetzten längenverstellbare Hubarme jeweils als Kolben-Zylinder-Einheit ausgebildet und wirken dabei insbesondere als hydraulische Hubzylinder, welche mit einem hydraulischen Steuerkreislauf am Fahrzeug technisch einfach koppelbar sind.

In einer weiteren bevorzugten Ausführung sind einzelne längenverstellbare Hubarme jeweils als eine Spindel-Gewinde-Einheit (Hubspindel) ausgebildet. Deren Länge kann z.B. mittels eines zusätzlichen Hubarmes innerhalb des Krafthebers verstellt werden. Dabei ist dieser zusätzliche Hubarm insbesondere als hydraulisch ansteuerbarer Hubzylinder ausgebildet.

Vorteilhaft wird die ermittelte Masse des Anbaugerätes zusätzlich dazu verwendet, um Daten über den Schwerpunkt des Anbaugerätes zu ermitteln. Hierdurch kann eine Bewegungssteuerung des Heckkrafthebers unterstützt werden, z.B. für eine genaue Überführung des Anbaugerätes in eine gewünschte Soll-Position.

Vorzugsweise wird für eine eindeutige Ermittlung des Schwerpunktes ein Koordinatensystem definiert mit einer x-Achse und einer z-Achse. Dabei ist die x-Achse parallel zu einer Längsrichtung bzw. einer Fahrzeug-Horizontalen des Nutzfahrzeugs ausgerichtet und die z-Achse parallel zu einer Hochrichtung bzw. einer Fahrzeug-Vertikalen des Nutzfahrzeugs ausgerichtet, wobei sich die x-Achse und die z-Achse in einem Nullpunkt des Koordinatensystems schneiden. Hierdurch lassen sich die Daten des Schwerpunktes mathematisch einfach mit einem eindeutigen Bezugspunkt ermitteln. Geeignete Nullpunkte sind beispielsweise die Position einer Hinterachse des Nutzfahrzeugs.

In einer bevorzugten Ausführungsform beinhalten die zu ermittelnden Daten des Schwerpunktes des Anbaugerätes dessen x-Koordinate in dem vorgenannten Koordinatensystem, wodurch mit geringem algorithmischen Verarbeitungsaufwand für viele Anwendungsfälle ausreichende Daten für eine Bewegungssteuerung des Heckkrafthebers und für eine Ermittlung der aktuellen Position des Anbaugerätes ermittelbar sind.

Vorzugsweise wird die x-Koordinate des Schwerpunktes des Anbaugerätes in Abhängigkeit mindestens einer der folgenden physikalischen Größen am Heckkraftheber ermittelt:

- einem Winkel zwischen dem Oberlenker und einer Fahrzeug-Horizontalen,

- einer an einer Verbindung zwischen Oberlenker und Anbaugerät angreifenden und entlang des Oberlenkers wirksamen Kraft,
- einer x-Koordinate einer Anlenkstelle des Unterlenkers am Anbaugerät,
- einer Differenz zwischen den x-Koordinaten einer Anlenkstelle des Oberlenkers am Anbaugerät und einer Anlenkstelle des Unterlenkers am Anbaugerät,
- einer Differenz zwischen den z-Koordinaten einer Anlenkstelle des Oberlenkers am Anbaugerät und einer Anlenkstelle des Unterlenkers am Anbaugerät, und
- der ermittelten Masse

Das erfindungsgemäße Verfahren wird im Folgenden anhand der beigefügten Zeichnungen näher erläutert. Dabei können hinsichtlich ihrer Funktion übereinstimmende bzw. vergleichbare Bauteile mit denselben Bezugszeichen gekennzeichnet sein. Es zeigen:

Fig. 1 eine schematische Seitenansicht eines heckseitig an einem Nutzfahrzeug mittels eines Heckkrafthebers angelenkten Anbaugerätes,

Fig. 2 eine schematische Darstellung von an einem Gelenkarm des Heckkrafthebers gemäß Fig. 1 angreifenden Kräften,

Fig. 3 eine schematische Darstellung von an dem Anbaugerät gemäß Fig. 1 angreifenden Kräften, und

Fig. 4 eine schematische Darstellung von an einem Unterlenker des Heckkraftebers gemäß Fig. 1 angreifenden Kräften.

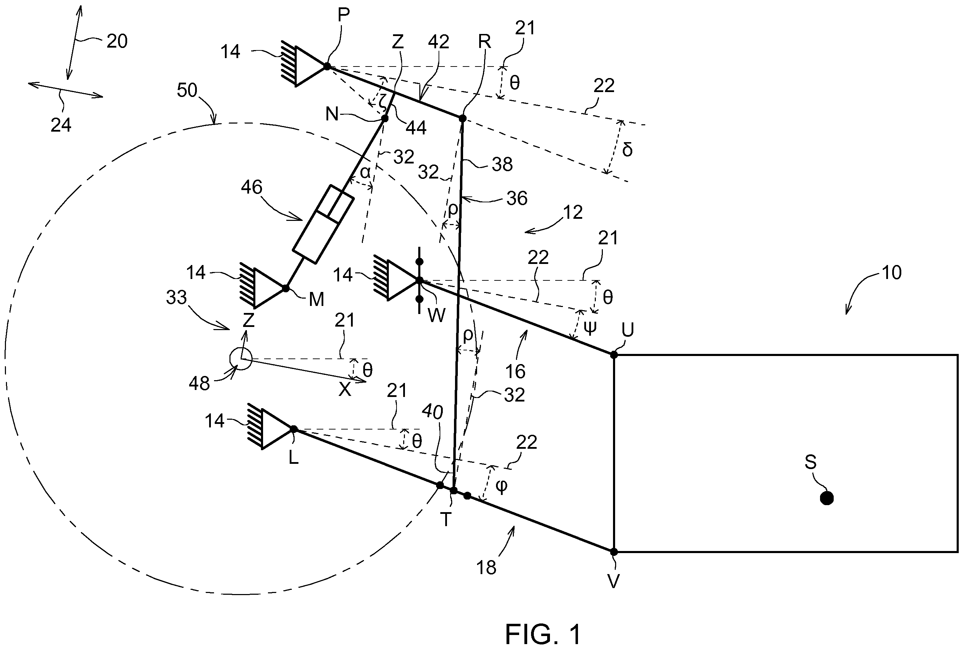

Fig. 1 zeigt schematisch ein Anbaugerät 10, welches an einer Heckseite eines Nutzfahrzeugs (vorzugsweise eines Traktors) angelenkt ist. Hierbei ist der Kraftheber als Heckkraftheber 12 ausgebildet und an der Tragstruktur 14 des Nutzfahrzeugs angelenkt. Der Heckkraftheber 12 weist einen Oberlenker 16 und zwei parallele Unterlenker 18 zur Aufnahme des Anbaugerätes 10 auf. Der Oberlenker 16 ist über eine Anlenkstelle W mit der Tragstruktur 14 und über eine Anlenkstelle U mit dem Anbaugerät 10 gelenkig verbunden. In der lotrecht zur Zeichenblattebene verlaufenden Querrichtung des Nutzfahrzeugs ist der Oberlenker 16 vorzugsweise mittig zwischen den beiden parallelen Unterlenkern 18 angeordnet. Jeder Unterlenker 18 ist über eine Anlenkstelle L mit der Tragstruktur 14 und über eine Anlenkstelle V mit dem Anbaugerät 10 gelenkig verbunden. Die Anlenkstellen U, V am Anbaugerät 10 sind in üblicher Weise, z.B. als Fanghaken des Hecckrafthebers 12, ausgebildet.

Die Anlenkstelle W lässt in Hochrichtung 20 des Nutzfahrzeugs im vorliegenden Ausführungsbeispiel drei verschiedene Positionen zur Anlenkung des Oberlenkers 16 zu. Die jeweilige Position wird vorzugsweise durch einen Benutzer festgelegt und entsprechend montiert. Zwischen dem Oberlenker 16 und einer Fahrzeug-Horizontalen 22 wird ein Winkel $\psi$ eingeschlossen. Zwischen jedem Unterlenker 18 und einer Fahrzeug-Horizontalen 22 wird ein Winkel $\varphi$ eingeschlossen.

Die gegenüber der Fahrzeug-Horizontalen 22 bzw. einer Fahrzeug-Vertikalen 32 gebildeten Winkel, insbesondere der Winkel $\psi$ und $\varphi$, beziehen sich hierbei auf ein fahrzeugfestes Koordinatensystem 33 mit einer x-Achse und einer z-Achse. Dabei verläuft die x-Achse parallel zu einer Längsrichtung 24 des Nutzfahrzeugs bzw. parallel zur Fahrzeug-Horizontalen 22. Die z-Achse verläuft parallel zur Hochrichtung 20 des Nutzfahrzeugs bzw. parallel zur Fahrzeug-Vertikalen 32. Die Neigung der Tragstruktur 14 und damit der Fahrzeug-Horizontalen 22 des Nutzfahrzeugs gegenüber der Erdhorizontalen 21 ist durch einen Neigungswinkel $\theta$ wiedergegeben. Der Neigungswinkel $\theta$ nimmt Werte größer Null für den Fall an, dass das Nutzfahrzeug in Vorwärtsrichtung hangaufwärts orientiert ist. Analog nimmt der Neigungswinkel $\theta$ Werte kleiner Null für den Fall an, dass das Nutzfahrzeug in Vorwärtsrichtung hangabwärts orientiert ist.

Ein in üblicher Weise als längenverstellbare Hubspindel 36 (Spindel-Gewinde-Einheit) ausgebildeter Hubarm ist Bestandteil des Heckkrafthebers 12. Die Hubspindel 36 weist zwei Wirkenden 38, 40 auf. Das Wirkende 38 ist mit einer Gelenkstelle R eines Gelenkarmes 42 gelenkig verbunden, während das andere Wirkende 40 der Hubspindel 36 an einer Lenker-Verbindungsstelle T des Unterlenkers 18 angelenkt ist. Die Lenker-Verbindungsstelle T lässt entlang der Längsrichtung 24 des Nutzfahrzeugs im vorliegenden Ausführungsbeispiel drei verschiedene Positionen zur Anlenkung der Hubspindel 36 am Unterlenker 18 zu. Die jeweilige Position wird vorzugsweise durch einen Benutzer festgelegt und entsprechend montiert. Eine Verbindungsstrecke zwischen den beiden Wirkenden 38, 40 der Hubspindel 36 schließt mit der in Hochrichtung 20 verlaufenden Fahrzeug-Vertikalen 32 einen Winkel $\rho$ ein. Vorzugsweise sind beide Unterlenker 18 mit jeweils einer Hubspindel 36 in der beschriebenen Weise verbunden.

Der Gelenkarm 42 weist eine erste Gelenkstelle P zur gelenkigen Verbindung mit der Tragstruktur 14 auf. An der zweiten Gelenkstelle R ist der Gelenkarm 42 mit der Hubspindel 36 gelenkig verbunden. Zwischen den beiden Gelenkstellen P, R ist eine dritte Gelenkstelle N vorhanden, die an einem Ausleger 44 des Gelenkarmes 42 angeordnet ist. Der Ausleger 44 zweigt an einer Abzweigstelle Z der Strecke PR ab. Ein zusätzlicher Hubarm in Form eines Hubzylinders 46 ist mit der dritten Gelenkstelle N und mit der Tragstruktur 14 an der Anlenkstelle M gelenkig verbunden. Vorzugsweise sind je Unterlenker 18 eine Hubspindel 36, ein Gelenkarm 42 und ein Hubzylinder 46 vorgesehen.

Die Verbindungsstrecke zwischen den Gelenkstellen P und R schließt mit der Fahrzeug-Horizontalen 22 einen Winkel δ ein. Die Verbindungsstrecke zwischen den Gelenkstellen P und N schließt mit der Fahrzeug-Horizontalen 22 einen Winkel ζ ein. Die Verbindungsstrecke zwischen den beiden Wirkenden des Hubzylinders 46 schließt mit der Fahrzeug-Vertikalen 32 einen Winkel α ein.

Zur mathematisch-geometrischen Ermittlung einer Masse m und eines Schwerpunktes S des heckseitigen Anbaugerätes 10 wird ein Koordinatensystem 33 definiert, dessen x-Achse parallel zur Längsrichtung 24 ausgerichtet ist und dessen z-Achse parallel zur Hochrichtung 20 ausgerichtet ist. Der Nullpunkt dieses Koordinatensystems 33 liegt im Ausführungsbeispiel gemäß Fig. 1 auf einer schematisch angedeuteten Hinterachse 48 des Nutzfahrzeugs. Ein Hinterrad 50 der Hinterachse 48 ist ebenfalls schematisch angedeutet.

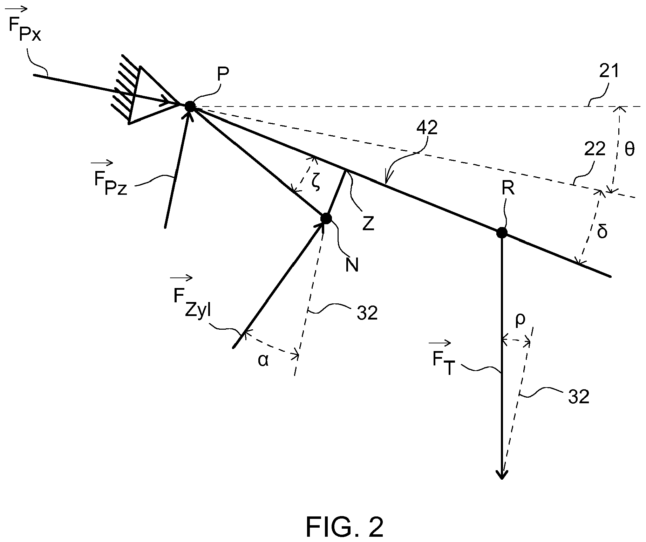

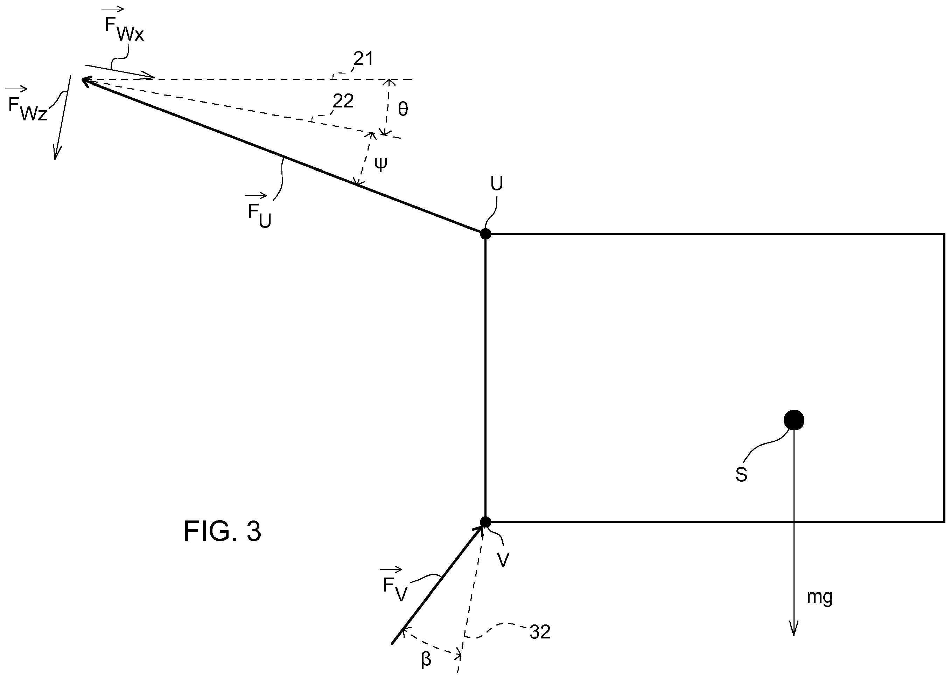

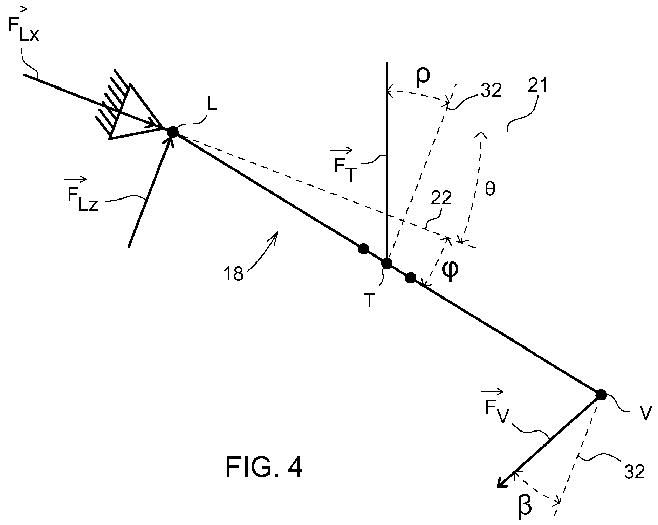

In Fig. 2 bis Fig. 4 sind verschiedene, an dem Kräftesystem zwischen Tragstruktur 14 und Anbaugerät 10 angreifende Kräfte dargestellt. An der Gelenkstelle P greift eine Kraft an, deren x-Komponente mit $F_{Px}$ und deren z-Komponente mit $F_{Pz}$ bezeichnet ist (Fig. 2). Zwischen den zwei Wirkenden des Hubzylinders 46 ist eine Zylinderkraft $F_{Zyl}$ wirksam. Zwischen der Gelenkstelle R des Gelenkarmes 42 und der Lenker-Verbindungsstelle T des Unterlenkers 18 ist eine Kraft $F_T$ wirksam. An der Anlenkstelle V greift eine Kraft $F_V$ an, die unter einem Winkel β gegenüber einer Fahrzeug-Vertikalen 32 ausgerichtet ist. (Fig. 3). Eine an der Anlenkstelle U angreifende und entlang des Oberlenkers 16 wirksame Kraft ist mit $F_U$ bezeichnet. Im Schwerpunkt S des Anbaugerätes 10 ist dessen Gewichtskraft mit m·g bezeichnet, wobei g die Gravitationskonstante ist. An der Anlenkstelle L greift eine Kraft an, deren x-Komponente mit $F_{Lx}$ und deren z-Komponente mit $F_{Lz}$ bezeichnet ist (Fig. 4).

Aufgrund der Momenten- und Kräftegleichgewichte in Fig. 2 kann bei dem Heckkraftheber 12 von folgenden Zusammenhängen ausgegangen werden:

$$\sum M_i^{(P)} = 0 \;\rightarrow$$
$$0 = -\overline{PR} \cdot \vec{F}_T \cdot \cos(\delta + \rho) + \overline{PN} \cdot \vec{F}_{Zyl} \cdot \cos(\zeta - \alpha) \tag{1}$$

$$\sum \vec{F}_{ix} = 0 \;\rightarrow$$
$$0 = \vec{F}_{Px} + \vec{F}_{Zyl} \cdot \sin \alpha + \vec{F}_T \cdot \sin \rho \tag{2}$$

$$\sum \vec{F}_{iz} = 0 \;\rightarrow$$
$$0 = \vec{F}_{Pz} + \vec{F}_{Zyl} \cdot \cos \alpha - \vec{F}_T \cdot \cos \rho \tag{3}$$

Aus Gleichung (1) ergibt sich außerdem

$$\vec{F}_T = \vec{F}_{Zyl} \cdot \frac{\overline{PN}}{\overline{PR}} \cdot \frac{\cos(\zeta - \alpha)}{\cos(\delta + \rho)} \tag{4}$$

Aufgrund der Momenten- und Kräftegleichgewichte in Fig. 3 kann bei dem Heckkraftheber 12 von folgenden weiteren Zusammenhängen ausgegangen werden:

$$\sum M_i^{(V)} = 0 \;\rightarrow$$
$$0 = (U_x - V_x) \cdot \vec{F}_U \cdot \sin \psi + (U_z - V_z) \cdot \vec{F}_U \cdot \cos \psi - (S_x - V_x) \cdot m \cdot g \cdot \cos \theta - (S_z - V_z) \cdot m \cdot g \cdot \sin \theta$$
$$\tag{5}$$

$$\sum \vec{F}_{ix} = 0 \;\rightarrow\; 0 = \vec{F}_V \cdot \sin\beta - \vec{F}_U \cdot \cos\psi + m \cdot g \cdot \sin\theta$$

$$\rightarrow \vec{F}_V \cdot \sin\beta = \vec{F}_U \cdot \cos\psi - m \cdot g \cdot \sin\theta \qquad (6)$$

$$\sum \vec{F}_{iz} = 0 \;\rightarrow\; 0 = \vec{F}_V \cdot \cos\beta + \vec{F}_U \cdot \sin\psi - m \cdot g \cdot \cos\theta$$

$$\rightarrow \vec{F}_V \cdot \cos\beta = -\vec{F}_U \cdot \sin\psi + m \cdot g \cdot \cos\theta \qquad (7)$$

Aufgrund der Momenten- und Kräftegleichgewichte in Fig. 4 kann bei dem Heckkraftheber 12 von folgenden weiteren Zusammenhängen ausgegangen werden:

$$\sum M_i^{(L)} = 0 \;\rightarrow$$

$$0 = -\overline{LT} \cdot \vec{F}_T \cdot \sin\rho \cdot \sin\varphi + \overline{LT} \cdot \vec{F}_T \cdot \cos\rho \cdot \cos\varphi - \overline{LV} \cdot \vec{F}_V \cdot \sin\varphi \cdot \sin\beta - \overline{LV} \cdot \vec{F}_V \cdot \cos\varphi \cdot \cos\beta$$

$$(8)$$

$$\sum \vec{F}_{ix} = 0 \;\rightarrow$$

$$0 = \vec{F}_V \cdot \sin\beta - \vec{F}_T \cdot \sin\rho + \vec{F}_{Lx} \qquad (9)$$

$$\sum \vec{F}_{iz} = 0 \;\rightarrow$$

$$0 = \vec{F}_V \cdot \cos\beta - \vec{F}_T \cdot \cos\rho + \vec{F}_{Lz} \qquad (10)$$

Durch Einsetzen der Gleichungen (6) und (7) in die Gleichung (8) sowie Auflösen der Gleichung (8) nach der Masse m des Anbaugerätes 10 ergibt sich für die Masse m

$$m = \frac{\overline{LT} \cdot \vec{F}_T \cdot \cos(\varphi + \rho) - LV \cdot \vec{F}_U \cdot \sin(\varphi - \psi)}{\overline{LV} \cdot g \cdot \cos(\varphi + \theta)} \qquad (11)$$

Somit wird die Masse m in Abhängigkeit

- des Winkels $\psi$ zwischen dem Oberlenker 16 und der Fahrzeug-Horizontalen 22,
- des Winkels $\varphi$ zwischen dem Unterlenker 18 und der Fahrzeug-Horizontalen 22,
- des Winkels $\rho$ zwischen der Hubspindel 36 und der Fahrzeug-Vertikalen 32,
- des Neigungswinkels $\theta$ der Tragstruktur 14 bzw. der Fahrzeug-Horizontalen 22 des Nutzfahrzeugs gegenüber der Erdhorizontalen 21,
- der Strecke LV entlang des Unterlenkers 18 als Verbindung zwischen den Anlenkstellen L und V,
- der Strecke LT entlang des Unterlenkers 18 zwischen der Anlenkstelle L und der Lenker-Verbindungsstelle T,
- der Kraft $F_T$ an der Hubspindel 36, und
- der Kraft $F_U$ entlang des Oberlenkers 16

ermittelt.

Die Länge der Strecke LV ist als Konstruktions-Parameter des Heckkrafthebers 12 bekannt. Die Länge der Strecke LT kann beispielsweise mittels eines Längensensors bzw. eines Abstandssensors gemessen werden oder diese Strecke LT ist aufgrund der benutzerabhängigen Montage der Hubspindel 36 am Unterlenker 18 bekannt. Die Kraft $F_U$ kann mittels Drucksensoren am Oberlenker 16 gemessen werden oder alternativ mittels eines zweiaxialen Kraftsensors an der Anlenkstelle W gemessen werden. Die Kraft $F_T$ kann indirekt ermittelt werden, indem mittels Drucksensoren am Hubzylinder 46 die Kraft $F_{Zyl}$ gemessen wird und die Gleichung (4) berücksichtigt wird. Die Strecken PN und PR des Gelenkarmes 42 in der Gleichung (4) sind vorzugsweise konstant und insoweit als Konstruktions-Parameter bekannt.

Der Winkel $\delta$ in Gleichung (4) kann mittels eines geeigneten Sensors (z.B. Winkelsensor) gemessen werden.

Daraus kann auch der Wert des Winkels $\zeta$ einfach abgeleitet werden:

$$\zeta = \tan^{-1}\left(\frac{P_z - N_z}{P_x - N_x}\right)$$

Die Gelenkstelle P hat feste x- und z-Koordinaten $P_x$ und $P_z$ bezüglich des Koordinatensystems 33. Die x-Koordinate $N_x$ und die z-Koordinate $N_z$ der Gelenkstelle N ergeben sich durch $N_x = P_x + \overline{PZ} \cdot \cos\delta + \overline{ZN} \cdot \sin\delta$ und $N_z = P_z - \overline{PZ} \cdot \sin\delta - \overline{ZN} \cdot \cos\delta$,
wobei der Winkel $\delta$, wie bereits erwähnt, gemessen wird und die Strecken PZ, ZN konstante Konstruktions-Parameter des Gelenkarmes 42 sind.

Der Winkel $\alpha$ in Gleichung (4) wird vorzugsweise folgendermaßen ermittelt:

$$\alpha = \tan^{-1}\left(\frac{N_x - M_x}{N_z - M_z}\right)$$

Die x-Koordinate $N_x$ und die z-Koordinate $N_z$ der Gelenkstelle N ergeben sich wie soeben erläutert, während die Anlenkstelle M feste x- und z-Koordinaten $M_x$ und $M_z$ bezüglich des Koordinatensystems 33 hat.

Die Winkel $\rho$, $\varphi$ und $\psi$ in den Gleichungen (4) und (11) können folgendermaßen hergeleitet werden:

$$\varphi = \tan^{-1}\left(\frac{L_z - T_z}{L_x - T_x}\right)$$

$$\psi = \tan^{-1}\left(\frac{U_z - W_z}{U_x - W_x}\right) = \tan^{-1}\left(\frac{\vec{F}_{Wz}}{\vec{F}_{Wx}}\right)$$

$$\rho = \tan^{-1}\left(\frac{T_x - R_x}{T_z - R_z}\right)$$

Die x-Koordinate $L_x$ und die z-Koordinate $L_z$ sind bekannt, da deren Anlenkstelle L an der Tragstruktur 14 feste Koordinaten bezüglich des Koordinatensystems 33 hat. Die x-Koordinate $W_x$ und die z-Koordinate $W_z$ der Anlenkstelle W sind vorzugsweise ebenfalls abhängig vom Anwendungsfall bekannt und werden entweder sensorisch ermittelt oder aber bedienerseitig vorgegeben.

Die vorgenannten Winkel können auch mittels geeigneter Winkelsensoren gemessen werden. Alternativ können zweiaxiale Kraftmessbolzen eingesetzt werden, wie anhand des Winkels $\psi$ und der beiden Kraftkomponenten $F_{Wx}$ (entlang der x-Achse des Koordinatensystems 33) und $F_{Wz}$ (entlang der z-Achse des Koordinatensystems 33) schematisch dargestellt (Fig. 2).

Die veränderlichen x-Koordinate $R_x$ und z-Koordinate und $R_z$ der Gelenkstelle R des Gelenkarmes 42 werden vorzugsweise wie folgt hergeleitet:

$$R_x = P_x + \overline{PR} \cdot \cos\delta \qquad \text{und} \qquad R_z = P_z - \overline{PR} \cdot \sin\delta$$

Dabei hat die Anlenkstelle P feste Koordinaten $P_x$ und $P_z$ bezüglich des Koordinatensystems 33. Die Strecke PR ist ein fester Konstruktions-Parameter des Gelenkarmes 42.

Die veränderlichen x-Koordinaten und z-Koordinaten $T_x$ und $T_z$ der Lenker-Verbindungsstelle T sowie $U_x$ und $U_z$ der Anlenkstelle U können mathematisch wie folgt hergeleitet werden:
Zur Berechnung der Lenker-Verbindungsstelle T werden zwei Kreise definiert. Der erste Kreis weist einen der Strecke LT entsprechenden Radius mit dem Kreismittelpunkt L und der zweite Kreis einen der Strecke RT entsprechenden Radius mit dem Kreismittelpunkt R auf. Die zugehörigen Kreisgleichungen lauten

$$\left(T_x - L_x\right)^2 + \left(T_z - L_z\right)^2 = \overline{LT}^2$$

$$\left(T_x - R_x\right)^2 + \left(T_z - R_z\right)^2 = \overline{TR}^2$$

Die beiden Kreisgleichungen werden nach der z-Komponente der Lenker-Verbindungsstelle T aufgelöst. Dies ergibt eine Geradengleichung einer durch die beiden Kreisschnittpunkte verlaufenden Geraden der Gestalt

$$T_z = -\underbrace{\left(\frac{R_x - L_x}{R_z - L_z}\right)}_{n} \cdot T_x + \underbrace{\left(\frac{\overline{LT}^2 - \overline{TR}^2 + R_x^2 + R_z^2 - L_x^2 - L_z^2}{2 \cdot (R_z - L_z)}\right)}_{b}$$

$$T_z = -n \cdot T_x + b$$

Bezüglich der Lenker-Verbindungsstelle T werden die quadratische Gleichung, die sich durch Einsetzen der Geradengleichung in eine der beiden Kreisgleichungen ergibt,

$$T_x^2 + \underbrace{\frac{2 \cdot (-R_x - n \cdot w)}{1 + n^2}}_{p_1} \cdot T_x + \underbrace{\frac{R_x^2 + w^2 - \overline{TR}^2}{1 + n^2}}_{q_1} = 0$$

sowie die Hilfsvariablen n, b und w

$$n = \left(\frac{R_x - L_x}{R_z - L_z}\right)$$

$$b = \left(\frac{\overline{LT}^2 - \overline{TR}^2 + R_x^2 + R_z^2 - L_x^2 - L_z^2}{2 \cdot (R_z - L_z)}\right)$$

$$w = b - R_z$$

definiert. Daraus ergeben sich für die x-Koordinate $T_x$ und die z-Koordinate $T_z$ folgende Gleichungen:

$$T_x = -\frac{p_1}{2} + \sqrt{\frac{p_1^2}{4} - q_1} = \frac{(R_x + n \cdot w)}{1 + n^2} + \sqrt{\left(\frac{(R_x + n \cdot w)}{1 + n^2}\right)^2 - \frac{R_x^2 + w^2 - \overline{TR}^2}{1 + n^2}} \qquad (12)$$

$$T_z = -n \cdot T_x + b \qquad (13)$$

Dabei kann die Strecke TR beispielsweise mittels eines Längensensors bzw. eines Abstandssensors an der Hubspindel 36 gemessen werden. Alternativ ist die Länge dieser Strecke TR aufgrund einer Vorgabe durch den Benutzer für die jeweilige Einstellung des Heckkrafthebers 12 bekannt.

Zur Berechnung der Anlenkstelle U werden zwei weitere Kreise definiert. Der erste Kreis weist einen der Strecke UV entsprechenden Radius mit dem Kreismittelpunkt V und der zweite Kreis einen der Strecke WU entsprechenden Radius mit dem Kreismittelpunkt W auf. Die zugehörigen Kreisgleichungen lauten

$$\left(U_x - V_x\right)^2 + \left(U_z - V_z\right)^2 = \overline{UV}^2$$

$$\left(U_x - W_x\right)^2 + \left(U_z - W_z\right)^2 = \overline{WU}^2$$

Die beiden Kreisgleichungen werden nach der z-Komponente der Anlenkstelle U aufgelöst. Dies ergibt eine Geradengleichung einer durch die beiden Kreisschnittpunkte verlaufende Geraden der Gestalt

$$U_z = -u \cdot U_x + s$$

$$U_z = -\underbrace{\left(\frac{W_x - V_x}{W_z - V_z}\right)}_{u} \cdot U_x + \underbrace{\left(\frac{\overline{UI}^2 - \overline{WU}^2 + W_x^2 + W_z^2 - V_x^2 - V_z^2}{2 \cdot \left(W_z - V_z\right)}\right)}_{s}$$

Bezüglich der Anlenkstelle U werden die quadratische Gleichung, die sich durch Einsetzen der Geradengleichung in eine der beiden Kreisgleichungen ergibt,

$$U_x^2 + \underbrace{\frac{2 \cdot \left(-W_x - u \cdot z\right)}{1 + u^2}}_{p_2} \cdot U_x + \underbrace{\frac{W_x^2 + z^2 - \overline{WU}^2}{1 + u^2}}_{q_2} = 0$$

sowie die Hilfsvariablen u, s und z

$$u = \left(\frac{W_x - V_x}{W_z - V_z}\right)$$

$$s = \left(\frac{\overline{UV}^2 - \overline{WU}^2 + W_x^2 + W_z^2 - V_x^2 - V_z^2}{2 \cdot \left(W_z - V_z\right)}\right)$$

$$z = s - W_z$$

definiert. Daraus ergeben sich für die x-Koordinate $U_x$ und die z-Koordinate $U_z$ folgende Gleichungen:

$$U_x = -\frac{p_2}{2} + \sqrt{\frac{p_2^2}{4} - q_2} = \frac{\left(W_x + u \cdot z\right)}{1 + u^2} + \sqrt{\left(\frac{\left(W_x + u \cdot z\right)}{1 + u^2}\right)^2 - \frac{W_x^2 + z^2 - \overline{WU}^2}{1 + u^2}} \qquad (14)$$

$$U_z = -u \cdot U_x + s \qquad (15)$$

Dabei kann die Strecke WU beispielsweise mittels eines Längensensors bzw. eines Abstandssensors am Oberlenker 16 gemessen werden. Die Strecke UV ist ein definierter Wert entsprechend der Dimensionierung des Anbaugerätes 10.

Die x-Koordinate $S_x$ des Schwerpunktes S des Anbaugerätes 10 bezüglich des Koordinatensystems 33 kann durch Auflösen der Gleichung (5) nach $S_x$ ermittelt werden. In diesem Fall wird der Neigungswinkel θ vereinfachend mit Null Grad angenommen:

$$S_x = \frac{1}{m \cdot g}\left[(U_x - V_x)\cdot \vec{F}_U \cdot \sin\psi + (U_z - V_z)\cdot \vec{F}_U \cdot \cos\psi + V_x \cdot m \cdot g\right] \qquad (16)$$

Somit wird die x-Koordinate des Schwerpunktes S in Abhängigkeit

- der ermittelten Masse m,
- des Winkels ψ zwischen Oberlenker 16 und der Fahrzeug-Horizontalen 22,
- der Kraft $F_U$ am Oberlenker 16,
- der x-Koordinate $V_x$ der Anlenkstelle V des Unterlenkers 18 am Anbaugerät 10,
- der Differenz zwischen den x-Koordinaten $U_x$ und $V_x$ der Anlenkstellen U und V am Anbaugerät 10, und
- der Differenz zwischen den z-Koordinaten $U_z$ und $V_z$ der Anlenkstellen U und V am Anbaugerät 10

ermittelt.

Die x-Koordinate $V_x$ und die z-Koordinate $V_z$ der Anlenkstelle V ergeben sich z.B. durch

$$V_x = L_x + \overline{LV}\cdot\cos\varphi \qquad \text{und} \qquad V_z = L_z - \overline{LV}\cdot\sin\varphi \qquad ,$$

wobei die Strecke LV als Konstruktions-Parameter bekannt ist und die Anlenkstelle L feste x- und z-Koordinaten $L_x$ und $L_z$ bezüglich des Koordinatensystems 33 hat. Die übrigen Bestandteile und Werte der Gleichung (16) können gemäß der obigen Beschreibung hergeleitet werden.

**Patentansprüche**

1. Verfahren zur Ermittlung einer Masse eines Anbaugerätes (10), welches mittels eines Heckkrafthebers (12) an eine Tragstruktur (14) eines Nutzfahrzeugs heckseitig angelenkt ist, wobei der Heckkraftheber (12) mindestens einen Oberlenker (16), mindestens einen Unterlenker (18) und einen längenverstellbaren Hubarm (36) aufweist, wobei ein Wirkende (38) des Hubarmes (36) mit der Tragstruktur (14) gelenkig verbunden wird und ein anderes Wirkende (40) des Hubarmes (36) an einer Lenker-Verbindungsstelle (T) des Unterlenkers (18) angelenkt wird, **dadurch gekennzeichnet, dass** die Masse m des Anbaugerätes (10) gemäß

$$m = \frac{\overline{LT}\cdot \vec{F}_T \cdot \cos(\varphi + \rho) - \overline{LV}\cdot \vec{F}_U \cdot \sin(\varphi - \psi)}{\overline{LV}\cdot g \cdot \cos(\varphi + \theta)}$$

in Abhängigkeit der folgenden Größen ermittelt wird:

- eines Winkels ψ zwischen dem Oberlenker (16) und einer Fahrzeug-Horizontalen (22),
- eines Winkels φ zwischen dem Unterlenker (18) und der Fahrzeug-Horizontalen (22),
- eines Winkels ρ zwischen einer Fahrzeug-Vertikalen (32) und einer Verbindungsstrecke RT zwischen zwei Wirkenden (38, 40) des Hubarmes (36),
- eines Neigungswinkels θ der Fahrzeug-Horizontalen (22) gegenüber der Erdhorizontalen (21),
- einer Strecke LV, welche eine Verbindung entlang des Unterlenkers (18) zwischen der Tragstruktur (14) und dem Anbaugerät (10) repräsentiert,
- einer Strecke LT, welche eine Verbindung entlang des Unterlenkers (18) zwischen der Tragstruktur (14) und der Lenker-Verbindungsstelle (T) repräsentiert,
- einer zwischen den zwei Wirkenden (38, 40) des Hubarmes (36) wirksamen Kraft $F_T$, und
- einer an einer Verbindung zwischen Oberlenker (16) und Anbaugerät (10) angreifenden und entlang des Oberlenkers (16) wirksamen Kraft $F_U$.

**2.** Verfahren nach Anspruch 1, **dadurch gekennzeichnet, dass** das der Tragstruktur (14) zugeordnete Wirkende (38) des Hubarmes (36) über einen Gelenkarm (42) mit der Tragstruktur (14) gelenkig verbunden wird.

**3.** Verfahren nach Anspruch 2, **dadurch gekennzeichnet, dass** der Gelenkarm (42)

- eine der Tragstruktur (14) zugeordnete erste Gelenkstelle (P) und eine dem Hubarm (36) zugeordnete zweite Gelenkstelle (R) aufweist, und
- zwischen diesen beiden Gelenkstellen (P, R) eine dritte Gelenkstelle (N) aufweist.

**4.** Verfahren nach Anspruch 3, **dadurch gekennzeichnet, dass** ein längenverstellbarer zusätzlicher Hubarm (46) für seine Längenverstellung mit der dritten Gelenkstelle (N) und mit der Tragstruktur (14) gelenkig verbunden wird.

**5.** Verfahren nach einem der Ansprüche 2 bis 4, **dadurch gekennzeichnet, dass** ein Hubarm eine Kolben-Zylinder-Einheit (46) aufweist, insbesondere aus einer Kolben-Zylinder-Einheit (46) besteht.

**6.** Verfahren nach einem der Ansprüche 2 bis 4, **dadurch gekennzeichnet, dass** ein Hubarm eine Spindel-Gewinde-Einheit (36) aufweist, insbesondere aus einer Spindel-Gewinde-Einheit (36) besteht.

**7.** Verfahren nach einem der vorhergehenden Ansprüche, **dadurch gekennzeichnet, dass** ein Schwerpunkt (S) des Anbaugeräts (10) in Abhängigkeit von der ermittelten Masse m des Anbaugeräts (10) ermittelt wird.

**8.** Verfahren nach einem der vorhergehenden Ansprüche, **dadurch gekennzeichnet, dass** zur Ermittlung der Masse m und/oder eines Schwerpunktes (S) des Anbaugerätes (10) ein Koordinatensystem (33) definiert wird mit einer parallel zu einer Längsrichtung (24) des Nutzfahrzeugs ausgerichteten x-Achse und einer parallel zu einer Hochrichtung (20) des Nutzfahrzeugs ausgerichteten z-Achse, wobei sich die x-Achse und die z-Achse in einem Nullpunkt des Koordinatensystems (33) schneiden.

**9.** Verfahren nach Anspruch 8, **dadurch gekennzeichnet, dass** der Nullpunkt an einer Hinterachse (48) des Nutzfahrzeugs angeordnet ist.

**10.** Verfahren nach Anspruch 8 oder 9, **dadurch gekennzeichnet, dass** eine x-Koordinate des Schwerpunktes (S) des Anbaugeräts (10) in Abhängigkeit von der Masse m des Anbaugeräts (10) ermittelt wird.

**11.** Verfahren nach Anspruch 10, **dadurch gekennzeichnet, dass** die x-Koordinate des Schwerpunktes (S) in Abhängigkeit von mindestens folgenden Größen ermittelt wird:

- einem Winkel $\psi$ zwischen dem Oberlenker (16) und einer Fahrzeug-Horizontalen (22),
- einer an einer Verbindung (U) zwischen Oberlenker (16) und Anbaugerät (10) angreifenden und entlang des Oberlenkers (16) wirksamen Kraft $F_U$,
- einer x-Koordinate einer Anlenkstelle (V) des Unterlenkers (18) am Anbaugerät (10),
- einer Differenz zwischen den x-Koordinaten einer Anlenkstelle (U) des Oberlenkers (16) am Anbaugerät (10) und einer Anlenkstelle (V) des Unterlenkers (18) am Anbaugerät (10), und
- einer Differenz zwischen den z-Koordinaten einer Anlenkstelle (U) des Oberlenkers (16) am Anbaugerät (10) und einer Anlenkstelle (V) des Unterlenkers (18) am Anbaugerät (10) .

**Claims**

**1.** Method for determining a mass of an attachment (10) which is coupled on the rear side to a supporting structure (14) of a work vehicle by means of a rear power lift (12), wherein the rear power lift (12) has at least one upper link (16), at least one lower link (18) and a length-adjustable lifting arm (36), wherein one operative end (38) of the lifting arm (36) is connected in an articulated manner to the supporting structure (14) and another operative end (40) of the lifting arm (36) is coupled to a link connecting point (T) of the lower link (18), **characterized in that** the mass m of the attachment (10) is determined in accordance with

$$m = \frac{\overline{LT} \cdot \vec{F}_T \cdot \cos(\varphi + \rho) - \overline{LV} \cdot \vec{F}_U \cdot \sin(\varphi - \psi)}{\overline{LV} \cdot g \cdot \cos(\varphi + \theta)}$$

depending on the following variables:

- an angle $\psi$ between the upper link (16) and a vehicle horizontal (22),
- an angle $\varphi$ between the lower link (18) and the vehicle horizontal (22),
- an angle $\rho$ between a vehicle vertical (32) and a connecting section RT between two operative ends (38, 40) of the lifting arm (36),
- an angle of inclination $\theta$ of the vehicle horizontal (22) in relation to the earth horizontal (21),
- a section LV which represents a connection along the lower link (18) between the supporting structure (14) and the attachment (10),
- a section LT which represents a connection along the lower link (18) between the supporting structure (14) and the link connecting point (T),
- a force $F_T$ which is effective between the two operative ends (38, 40) of the lifting arm (36), and
- a force $F_U$ acting on a connection between upper link (16) and attachment (10) and effective along the upper link (16).

2. Method according to Claim 1, **characterized in that** the operative end (38) of the lifting arm (36) that is assigned to the supporting structure (14) is connected in an articulated manner to the supporting structure (14) via an articulated arm (42).

3. Method according to Claim 2, **characterized in that** the articulated arm (42)

- has a first articulation point (P) assigned to the supporting structure (14) and a second articulation point (R) assigned to the lifting arm (36), and
- a third articulation point (N) between these two articulation points (P, R).

4. Method according to Claim 3, **characterized in that** a length-adjustable additional lifting arm (46) is connected in an articulated manner for its length adjustment to the third articulation point (N) and to the supporting structure (14).

5. Method according to one of Claims 2 to 4, **characterized in that** a lifting arm has a piston-cylinder unit (46), in particular consists of a piston-cylinder unit (46).

6. Method according to one of Claims 2 to 4, **characterized in that** a lifting arm has a spindle-thread unit (36), in particular consists of a spindle-thread unit (36).

7. Method according to one of the preceding claims, **characterized in that** a centre of gravity (S) of the attachment (10) is determined depending on the determined mass m of the attachment (10).

8. Method according to one of the preceding claims, **characterized in that**, in order to determine the mass m and/or a centre of gravity (S) of the attachment (10), a system of coordinates (33) is defined with an x axis oriented parallel to a longitudinal direction (24) of the work vehicle and a z axis oriented parallel to a vertical direction (20) of the work vehicle, wherein the x axis and the z axis intersect at a zero point of the system of coordinates (33).

9. Method according to Claim 8, **characterized in that** the zero point is arranged on a rear axle (48) of the work vehicle.

10. Method according to Claim 8 or 9, **characterized in that** an x coordinate of the centre of gravity (S) of the attachment (10) is determined depending on the mass m of the attachment (10).

11. Method according to Claim 10, **characterized in that** the x coordinate of the centre of gravity (S) is determined depending on at least the following variables:

- an angle $\psi$ between the upper link (16) and a vehicle horizontal (22),
- a force $F_U$ acting on a connection (U) between upper link (16) and attachment (10) and effective along the upper link (16),

- an x coordinate of a coupling point (V) of the lower link (18) to the attachment (10),
- a difference between the x coordinates of a coupling point (U) of the upper link (16) to the attachment (10) and a coupling point (V) of the lower link (18) to the attachment (10), and
- a difference between the z coordinates of a coupling point (U) of the upper link (16) to the attachment (10) and a coupling point (V) of the lower link (18) to the attachment (10).

**Revendications**

1. Procédé de détermination d'une masse d'un équipement porté (10), lequel est articulé du côté arrière sur une structure porteuse (14) d'un véhicule utilitaire au moyen d'un relevage arrière (12), dans lequel le relevage arrière (12) comprend au moins un bras oscillant supérieur (16), au moins un bras oscillant inférieur (18) et un bras de relevage (36) réglable en longueur, dans lequel une extrémité fonctionnelle (38) du bras de relevage (36) est reliée de manière articulée à la structure porteuse (14) et une autre extrémité fonctionnelle (40) du bras de relevage (36) est articulée sur un point de liaison (T) du bras oscillant inférieur (18), **caractérisé en ce que** la masse m de l'équipement porté (10) est déterminée conformément à

$$m = \frac{\overline{LT} \cdot \vec{F}_T \cdot \cos(\varphi + \rho) - \overline{LV} \cdot \vec{F}_U \cdot \sin(\varphi - \psi)}{\overline{LV} \cdot g \cdot \cos(\varphi + \theta)}$$

en fonction des grandeurs suivantes :

- un angle $\psi$ entre le bras oscillant supérieur (16) et une ligne horizontale du véhicule (22),
- un angle $\varphi$ entre le bras oscillant inférieur (18) et la ligne horizontale du véhicule (22),
- un angle $\rho$ entre une ligne verticale du véhicule (32) et un trajet de liaison RT entre deux extrémités fonctionnelles (38, 40) du bras de relevage (36),
- un angle d'inclinaison $\theta$ de la ligne horizontale du véhicule (22) par rapport à la ligne horizontale terrestre (21),
- un trajet LV, lequel représente une liaison le long du bras oscillant inférieur (18) entre la structure porteuse (14) et l'équipement porté (10),
- un trajet LT, lequel représente une liaison le long du bras oscillant inférieur (18) entre la structure porteuse (14) et le point de liaison de bras oscillant (T),
- une force $F_T$ agissant entre les deux extrémités fonctionnelles (38, 40) du bras de relevage (36), et
- une force $F_U$ agissant sur une liaison entre le bras oscillant supérieur (16) et l'équipement porté (10) et agissant le long du bras oscillant supérieur (16).

2. Procédé selon la revendication 1, **caractérisé en ce que** l'extrémité fonctionnelle (38) du bras de relevage (36) associée à la structure porteuse (14) est reliée à la structure porteuse (14) par le biais d'un bras articulé (42).

3. Procédé selon la revendication 2, **caractérisé en ce que** le bras articulé (42)

- comprend un premier point d'articulation (P) associé à la structure porteuse (14) et un deuxième point d'articulation (R) associé au bras de relevage (36), et
- comprend un troisième point d'articulation (N) entre ces deux points d'articulation (P, R).

4. Procédé selon la revendication 3, **caractérisé en ce qu'**un bras de relevage (46) supplémentaire réglable en longueur est relié de manière articulée au troisième point d'articulation (N) et à la structure porteuse (14) pour son réglage en longueur.

5. Procédé selon l'une des revendications 2 à 4, **caractérisé en ce qu'**un bras de relevage comprend une unité piston-cylindre (46), en particulier est constitué d'une unité piston-cylindre (46).

6. Procédé selon l'une des revendications 2 à 4, **caractérisé en ce qu'**un bras de relevage comprend une unité broche-filetage (36), en particulier est constitué d'une unité broche-filetage (36).

7. Procédé selon l'une des revendications précédentes, **caractérisé en ce qu'**un centre de gravité (S) de l'équipement porté (10) est déterminé en fonction de la masse déterminée m de l'équipement porté (10).

8. Procédé selon l'une des revendications précédentes, **caractérisé en ce que** pour la détermination de la masse m et/ou d'un centre de gravité (S) de l'équipement porté (10), un système de coordonnées (33) est défini, présentant un axe x orienté parallèlement à une direction longitudinale (24) du véhicule utilitaire et un axe z orienté parallèlement à une direction verticale (20) du véhicule utilitaire, l'axe x et l'axe z se croisant en un point d'origine du système de coordonnées (33).

9. Procédé selon la revendication 8, **caractérisé en ce que** le point d'origine est disposé sur un essieu arrière (48) du véhicule utilitaire.

10. Procédé selon la revendication 8 ou 9, **caractérisé en ce qu'**une coordonnée x du centre de gravité (S) de l'équipement porté (10) est déterminée en fonction de la masse m de l'équipement porté (10).

11. Procédé selon la revendication 10, **caractérisé en ce que** la coordonnée x du centre de gravité (S) est déterminée en fonction d'au moins les grandeurs suivantes :

   - un angle $\psi$ entre le bras oscillant supérieur (16) et une ligne horizontale du véhicule (22),
   - une force $F_U$ agissant sur une liaison (U) entre le bras oscillant supérieur (16) et l'équipement porté (10) et agissant le long du bras oscillant supérieur (16),
   - une coordonnée x d'un point d'articulation (V) du bras oscillant inférieur (18) sur l'équipement porté (10),
   - une différence entre les coordonnées x d'un point d'articulation (U) du bras oscillant supérieur (16) sur l'équipement porté (10) et d'un point d'articulation (V) du bras oscillant inférieur (18) sur l'équipement porté (10), et
   - une différence entre les coordonnées z d'un point d'articulation (U) du bras oscillant supérieur (16) sur l'équipement porté (10) et d'un point d'articulation (V) du bras oscillant inférieur (18) sur l'équipement porté (10) .

FIG. 1

EP 3 238 515 B1

FIG. 2

EP 3 238 515 B1

FIG. 3

EP 3 238 515 B1

FIG. 4

**IN DER BESCHREIBUNG AUFGEFÜHRTE DOKUMENTE**

**In der Beschreibung aufgeführte Patentdokumente**

- EP 2947431 A1